# EUROPEAN PATENT SPECIFICATION

(11) **EP 3 953 014 B1**
(45) Date of publication and mention of the grant of the patent: **09.08.2023**
(21) Application number: 20731194.5
(22) Date of filing: 08.04.2020
(51) Int. Cl.: B01D 25/164, B01D 25/172, B01D 25/38

(54) **WASHING DEVICE OF A FILTERPRESS**
WASCHVORRICHTUNG EINER FILTERPRESSE
DISPOSITIF DE LAVAGE D'UN FILTRE-PRESSE

(30) Priority: 08.04.2019 IT 201900005310; 07.04.2020 IT 202000007354
(43) Date of publication of application: 16.02.2022
(73) Proprietor: MATEC INDUSTRIES SPA, 20121 Milano (MI) (IT)
(72) Inventor: GOICH, Matteo, 54038 MONTIGNOSO (MS) (IT); BERTOLUCCI, Massimo, 54100 MASSA (MS) (IT)
(74) Representative: Mari, Marco Giovanni
(86) International application number: PCT/IB2020/053336
(87) International publication number: WO 2020/208534

(56) References cited:
- WO-A1-94/07584
- WO-A1-2016/179408
- DE-A1- 2 823 501
- KR-B1- 101 738 389

## Description

### Field of the invention

The present invention relates to a washing device mounted on a filterpress used in a clarification and dehydration plant of sludge, derivatives for example by stones processing.

Furthermore, the present invention relates to a washing method of filtering plates of a filterpress.

### State of the art

Are known washing devices arranged on a filterpress. The washing devices allow to wash the filtering plates, to remove muddy material residues, after a compression and dehydrating process of sludge.

A common washing device is mounted above filtering plates and it is moved, through suitable means, along all the length of the filtering plates package.

The washing device comprises a plurality of nozzles that spray a washing fluid at high pressure. The washing fluid is activated contemporaneously to the movement of the washing device which it moves along a direction where the filtering plates are arranged. This way, the washing fluid can wash the filtering plates that are arranged in an open configuration, i.e. spaced to each other. The washing device according to the prior art has however some drawbacks.

Being the washing device arranged in a position higher than the filtering plates, the action of washing acts - and is mainly effective - in the corresponding upper part of the filtering plates and is not therefore uniform on all the surface of single filtering plates. Such aspect causes that solid residues remain on the filtering plates, causing inefficient action in the following sludge injection step in the filtering plates, which are not homogeneously filled by sludge, in addition to a risk of damage of the same filtering plates during the following compression and compaction processes, since that solid residues can damage the surface of the filtering plates.

Document KR 101 738 389 B1 discloses a washing device of a filterpress comprising:
- a support carriage, wherein said support carriage is adapted for slidingly mountinged on sliding guides of the filterpress above a plurality of filtering plates aligned to each other along a longitudinal extension direction,
- a washing group that comprises at least one nozzle that is adapted to supply a washing fluid flow,
- first actuating means that is adapted to move said support carriage according to said longitudinal extension direction,
- second actuating means that is adapted to move said washing group according to a top to down direction and vice-versa such that said washing group enters in a space defined between two filtering plates adjacent to each other in an open configuration.

Said second actuating means, that is adapted to move said washing group according to a top to down direction and vice-versa, comprise a transverse member extending in the left and right direction, and both ends of the transverse member are coupled to a lifting member through a bracket. Said lifting member includes a chain.

Also documents WO 2016/179408 A1, DE 28 23 501 A1, WO 94/07584 A1 show a filter press washing system as described above.

### Summary of the invention

It is therefore a feature of the present invention to provide a washing device of a filterpress adapted to wash uniformly the surface of each filtering plates of the filterpress.

It is another feature of the present invention to provide a washing device of a filterpress adapted to optimize the washing process and to reduce the waste of washing fluid.

It is also a feature of the present invention to provide a washing device of a filterpress that is structurally easy to make.

These and other objects are achieved by a washing device of a filterpress comprising:
- a support carriage,
   wherein said support carriage is adapted for slidingly mounting on sliding guides of the filterpress above a plurality of filtering plates aligned to each other along a longitudinal extension direction,
- a washing group that comprises at least one nozzle that is adapted to spray a washing fluid,
- first actuating means that is adapted to move said support carriage according to said longitudinal extension direction along the series of filtering plates arranged in an open configuration, where they are spaced with respect to each other,
- second actuating means that is adapted to actuating said washing group according to a top to down direction and vice-versa such that said washing group enters in a space defined between two adjacent filtering plates to each other in said open configuration,
wherein said washing group comprises a rolling shutter that is adapted to carry out the descent and ascent movement according to a vertical top to down direction and vice-versa

This way, the washing group is moved longitudinally along a series of filtering plates and in correspondence of each space defined between two adjacent filtering plates in the open configuration, descend in said space such that the jet erogated by said nozzle wash homogeneously the filtering plates. Then, the washing group rises again in the starting position.

This way, the washing group can be lower between the filtering plates and then return in the original position, to pass to another washing of subsequent filtering plates.

The washing of the other filtering plates repeat the steps of: move the support carriage in order to arrange the washing group in correspondence of an subsequent space between two other adjacent filtering plates, move the washing group into the space with a descent and ascent motion.

Advantageously, said washing group comprises a plurality of nozzles that is faced - in use - towards the respective surfaces of the two consecutive filtering plates.

In particular, the first and the second moving means are operated by a control unit programmed to:
actuating said support carriage along said longitudinal direction extension, positioning said washing group at a space defined between adjacent filtering plates to each other,
actuating said washing group downhill into the filtering plates, and contemporaneously to the handling downhill of the washing group activating the washing fluid flow,
actuating said washing group in ascent to return in the original position and stopping the washing fluid flow,
repeating said steps of actuating the support carriage, positioning the washing group and actuation downhill and ascent the washing group.

In particular, said support carriage is slidingly mounted on two side guides arranged above the filtering plates. The support carriage comprises wheels that slide along the side guides.

The actuating means is for example electric actuators mounted on the support carriage. In particular, is provided a translation gear motor adapted to actuate the support carriage along the side guides, and a descent gear motor adapted to actuate the washing group in a vertical movement. The first and the second gear motor are arranged on board of the support carriage.

Advantageously, the washing device is located in a rest position above a shoulder side, or shoulder sludge, of the filterpress.

Advantageously, are provided aligning sensors, in particular laser sensors or photocell or a combination thereof. This way, it is possible to adjust the position of the support carriage and then the position of the washing group with respect to the filtering plates. The aligning sensors allows to displace precisely the support carriage in order to positioning exactly the washing group at the space or space, i.e. the empty space defined between two adjacent filtering plates which are spaced to each other in the open configuration.

At washing beginning, said washing device is operated, and by the translation gear motor is guided in a position above a first opening space defined between two adjacent filtering plates. Once identified a correct position, the descent gear motor is activated in order to move down said rolling shutter. In detail, the rolling shutter drops between the two plates. During the descent motion, a high-pressure pump is activated, said high-pressure providing the jet of the washing fluid, for example water, to the washing group. The water comes out from nozzles that spray the surfaces of the filtering plates.

In particular, are provided proximity sensors arranged on the washing group that allow to adjust the descent stroke of the washing group. This way, the stroke of the washing group downhill is adjusted by said proximity sensors that act as end stop. In other words, the washing group drops until the proximity sensors detect them.

A this point the washing group stops and the washing process continuous for a time which can be selected by a controller configured by an operator.

Then the washing group, always through the descent gear motor, rises again.

During the raising motion, the water is still erogated by the nozzles, the erogation is stopped when the washing group exits completely from the filtering plates. Such succession of washing makes it possible to optimize the filtering plates washing process, obtaining a homogeneous and effective washing of all the surface of the filtering plates, and, furthermore, reducing and optimizing the washing fluid consumption.

These washing steps is repeated until filtering plates of a first stack or group are washed. The washing step can be provided for a series of filtering plates groups that are selectively moved in the open configuration.

For example, after the washing step of a first ten filtering plates, the washing device stops and wait the opening of a second stack or group of filtering plates. At this point, by the translation gear motor the carriage is moved in a subsequent position above a second group of filtering plates with the control of the aligning sensors. The washing step continuous until that all the groups of filtering plates are washed. Ended the washing process, the washing device returns thereof in a rest position above the shoulder sludge.

Thus, start the washing step of the second group of filtering plates.

In addition, on said support carriage is provided, furthermore, a position sensor, in particular an encoder, operated by said control unit.

Preferably on said support carriage is arranged a guiding chain shaped as a channel in which it is arranged a feeding duct of washing fluid that feeds the nozzles, the guiding chain is adapted to guiding the feeding duct following the stroke that carries out the support carriage and/or the washing group.

Furthermore, is provided a wheel roller duct that allows to guide the feeding duct in the descent stroke of the washing group.

Preferably is provided a cable holder chain that allows to arrange electric cables adapted to feed the first and second actuating means.

According to another aspect of the invention is provided a washing method to wash filtering plates of a filterpress, said washing method comprising the steps of: prearranging a support carriage, wherein said support carriage is slidingly mounted above a plurality of filtering plates aligned to each other along a longitudinal extension direction and comprises a washing group that comprises at least one nozzle that is adapted to spray a washing fluid,
actuating said support carriage according to said longitudinal extension direction said ion along the series of filtering plates arranged in an open configuration, where said filtering plates are spaced to each other,
actuating said washing group according to a top to down direction and vice-versa such that said washing group enters in a space defined between two adjacent filtering plates in said open configuration,
spraying a washing fluid from said at least one nozzle contemporaneously to said actuating step of said washing group into said space.

Advantageously, by said actuating step of said support carriage along said longitudinal direction is carry out a positioning of said washing group in correspondence to the space defined between adjacent filtering plates.

In particular, by the step of actuating the washing group downhill along the filtering plates, the step provides actuating said washing group in ascent for bring it back it position original and a step of interruption of the washing fluid flow. Advantageously, said spray step is discontinued when said washing group moved to ascent has achieved the position original outside of the filtering plates. Preferably is provided a stop step and a contemporaneous delivery of the washing fluid when the washing group descent between the plates of washing. The stop step and delivery in position static is done for a predetermined time programmable from sheet operator.

Advantageously, said steps of actuating the support carriage, positioning the washing group and actuating downhill and ascent the washing group are previous steps for each couple of filtering plates.

Advantageously, the washing method is programmed for laving groups of filtering plates the filterpress arranged in the open configuration and distant of the filtering plates.

### Description of figures of the invention

Further characteristic and advantages of the invention are better shown by the examination the following detailed description of a shape of preferred embodiment, but not exclusive, shown for example and not limitative, with the support of the attached drawings, wherein:
- Fig. 1 shows a perspective view of a washing device according to the present invention mounted on a filterpress ;
- Fig. 2 shows a view in a first perspective of the washing device according to the present invention;
- Fig. 3 shows a view in a second perspective of the washing device according to the present invention;
- Fig. 4 shows an elevational front view of the washing device according to the present invention;
- Fig. 5 shows an elevational side view of the washing device mounted on the filter press;
- Figs from 6 to 9 show an elevational front view of the configurations that assume the washing device, according to the present invention, during a succession operative of washing.

### Detailed description of the invention

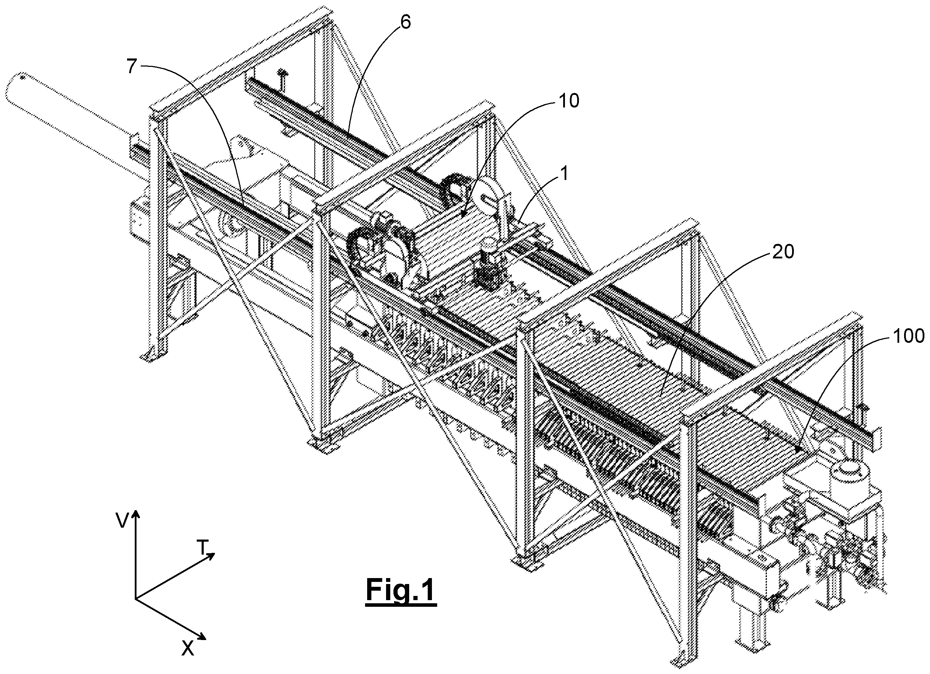

With reference to Fig. 1, is shown a washing group 10 of a filterpress 100 that comprises a support carriage 1 slidingly mounted on sliding guides 6, 7 above a plurality of filtering plates 20 aligned to each other along a longitudinal extension direction X.

The support carriage 1 is arranged on two side guides 6 and 7 that extend for all the length of the filterpress 100. The side guides 6, 7 are located at a predetermined level with respect to the ground such that the support carriage 1 result arranged above the filtering plates 20, as it is described hereinafter.

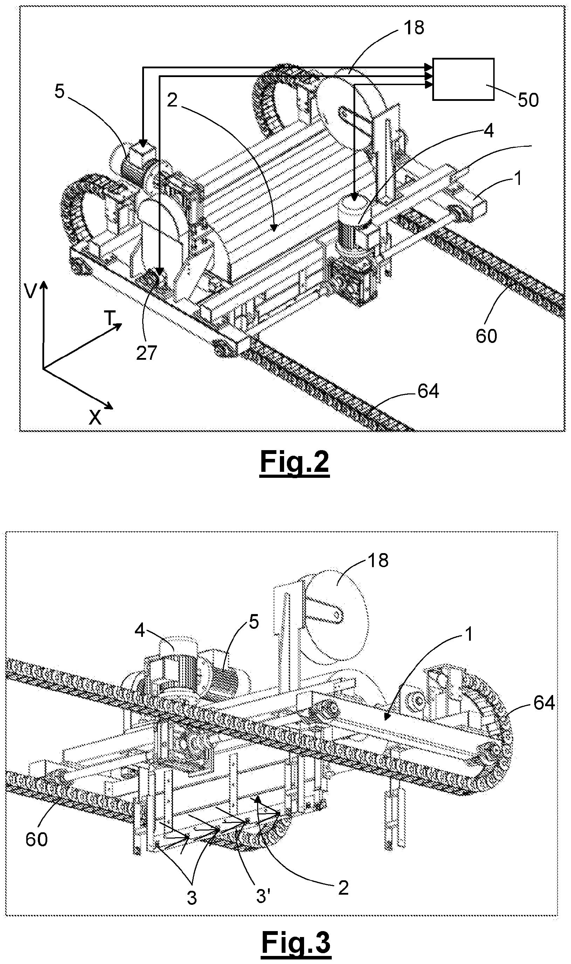

The washing group 10 comprises a washing group 2, better shown in Figs. 2 and 3, having at least one nozzle 3 that is adapted to spray a washing fluid 3'. In an advantageous way, a plurality of nozzles 3 (Fig. 3) distributed along the washing group 2 is provided. The washing group 2 has a transversal extension T, orthogonal with respect to the longitudinal extension X, said nozzles 3 are advantageously, equally spaced along said transversal extension T. This way, the washing fluid 3' is supplied uniformly on the filtering plates 20.

Are, furthermore, provided first actuating means 4 that is adapted to actuating the support carriage 1 according to the longitudinal extension direction X along the series of filtering plates 20, and second actuating means 5 that is adapted to actuating the washing group 2 according to a direction V from top to down and vice-versa. This way, the washing group 2 can penetrate in a space D defined between two adjacent to each other filtering plates 20, when the latter are in an open configuration, i.e. at a space from each other.

The washing group 2 is therefore moved longitudinally along the series of filtering plates 20, direction X, in order to be positioned selectively in correspondence of each space D defined between two adjacent filtering plates 20 in the open configuration, direction V. The washing group 2 is moved down between the plates 20 such that the jet 3' emitted by nozzles 3 can wash homogeneously the filtering plates 20. Then, the washing group 2 is moved up again in the starting position, above the filtering plates 20.

The washing of the other filtering plates 20 repeat the same actuation steps, advantageously, with a step movement or continuous movement of the support carriage 1, in order to: bring the washing group 2 in correspondence of each space D between two filtering plates 20, to move down the washing group 2 and to move up the same, as it is hereinafter described in detail.

The washing group 2 therefore comprises a plurality of nozzles 3 that is faced in use towards the respective surfaces of the two filtering plates 20. The spray 3' supplied by the nozzles 3 can be monodirectional, or advantageously, bidirectional in order to wash a front portion and a back portion of the filtering plates 20. Can also be provided a side jet that allows to wash according to a substantially parallel direction to the filtering plates 20. The jet 3' being a fan-shaped makes it possible to eliminate impurities along the boundary edges of the filtering plates, pushing the impurities outwards.

Structurally, the actuating means are, for example, electric actuators mounted on the support carriage 1. In particular, is provided a first translation gear motor 4 for actuating the support carriage 1 along the side guides 6, 7, and a second descent gear motor 5 for actuating the washing group 2.

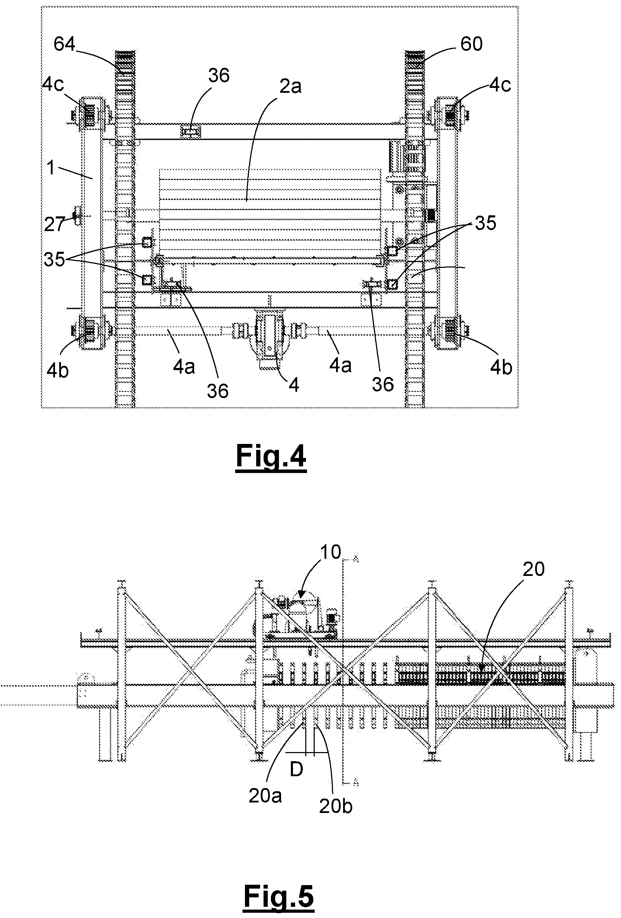

Functionally, both the actuators 4, 5 are operated by a control unit 50 (Fig. 2) programmed to:
actuating the support carriage 1 along the longitudinal direction X,
positioning the washing group 2 at a space D (Fig.5) defined between filtering plates 20 adjacent to each other 20a and 20b. After the positioning, the same control unit 50 operates the movements of the washing group 2 along the filtering plates 20a, 20b. Contemporaneously to the top to down movement of the washing group 2, or better once achieved a same level of an upper portion of the filtering plates 20, the spray of the washing fluid 3' is activated.

Effected the washing, which can be programmed responsive to a specific washing time, for example predetermined seconds, the control unit 50 moves up the washing group 2 in order that it return in the original position and achieve the upper end stop the washing fluid 3' flow.

The washing starts substantially when the nozzles 3 is located at a level where they are faced toward the surface of the filtering plate 20. This way, the washing fluid 3' is not wasted and it is not dispersed in external parts with respect to the surface of the filtering plates 20.

At this point, the control unit 50 starts to supply the washing fluid 3' that - following the top to down and vice versa movements of the washing group - wash homogeneously the filtering plate 20, substantially in two washing stroke: a first wash during descent, and a second wash during ascent of the washing group 2. The above described steps of actuating the support carriage 1, positioning the washing group 2 and actuating the descent and ascent movements the washing group 2, are repeated in order to complete the washing of each single filtering plate or groups of filtering plates.

In particular, the support carriage 1 is slidingly mounted on said side guides 6, 7 which are arranged at a level above the filtering plates 20. The support carriage 1 comprises wheels 4b, 4c that slide along the side guides 6, 7. In detail, the gear motor 4 transmits the motion to a couple of driving wheels 4b arranged on axes 4a. arranged on an opposite side a couple of driven wheels 4c is provided. In a preferred exemplary embodiment, all the wheels can be actuated.

In particular, the washing group 2 is moved by a shutter roller 2a (Fig. 4) that is adapted to carry out the top to down movements according to the direction V and vice-versa. This way, the washing group 2 can be moved down between the filtering plates 20 and then moved up to the position original, passing to wash a following filtering plates.

Advantageously, the washing group 10 is arranged in a rest position above a shoulder side, or shoulder sludge, of the filterpress 100, as shown in Fig. 5.

Advantageously, are provided aligning sensors, in particular, a laser sensor 35 and/or photocell 36 or a combination thereof. In particular, four laser sensors 35 arranged downstream and upstream of said roller shutter 2a and therefore with respect to the washing group 2 are provided. Each couple of the laser sensor 35 is mounted on a respective support carriage 1 edge. This way, it is possible to adjust the position of the support carriage 1 and then the position of the washing group 2 with respect to the filtering plates 20. The aligning sensors allows to arrange precisely the support carriage 1 at the end of positioning exactly the washing group 2 at the space D, i.e. the empty space defined between two adjacent filtering plates 20 to each other when is located in the open configuration.

Furthermore, they are arranged two sensors to photocell 36 at the washing group 2, also these each arranged on a with respect led, at the end of measuring and generating the actuating signal nozzles 3, when these is located frontally to the filtering plate 20.

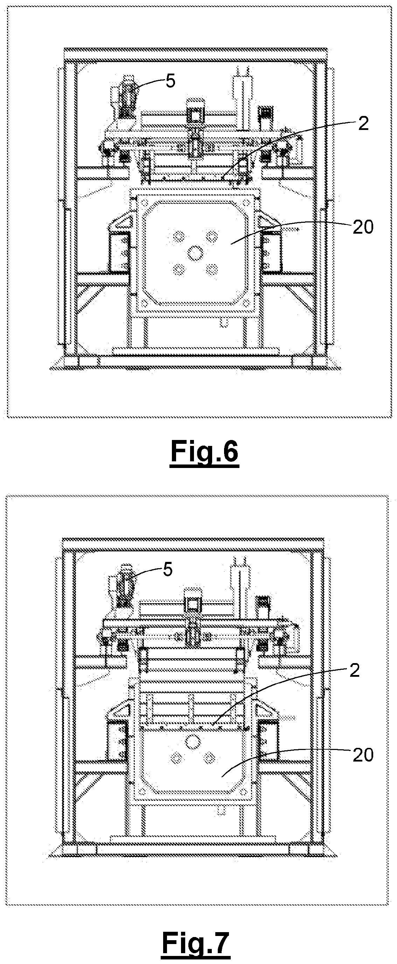

At washing beginning, the washing group 10 is activated by the translation gear motor 3 to move the same above the first opening space between two adjacent filtering plates 20 (Fig.6). Once identified the correct position, the descent gear motor 5 is activated to move down the washing group 10 by the rolling shutter between two adjacent plates 20a, 20b (Fig.7). During descent motion, an high pressure pump 15 is activated, said pump 15 is conformed to supply the washing fluid 3', for example water, to the washing group 2. The water comes out from the nozzles 3 that spray the washing fluid 3' on the filtering plates 20.

In particular, proximity sensors 36 arranged on the washing group 2 are provided, that allow to control the descent motion of the washing group 2. This way, the descent motion of the washing group 2 is adjusted and controlled by the proximity sensors 36 that act as a stroke end. In other words, the washing group 2 is moved down until the proximity sensors 36 detects the presence and stop it.

For example, are provided two photocell sensors 36 arranged on the washing group 2, each arranged on a respective side, in order to detect and generate the actuating signal of the nozzles 3, when these is located frontally to the filtering plate 20.

At this point the washing group 2 stops and continuous the washing for a selected time configured by an operator interface.

Then the washing group 2, always through the descent gear motor 5, is moved up again.

During the up motion, the water is still supplied and stops when the washing group 2 arrive at a level wherein is completely out with respect to the filtering plates 20. Such washing succession steps makes it possible to optimize the washing of the filtering plates, to obtain a homogeneous and effective washing of all the surface of the filtering plates, and, furthermore, reducing and optimizing the consumption of washing fluid 3'.

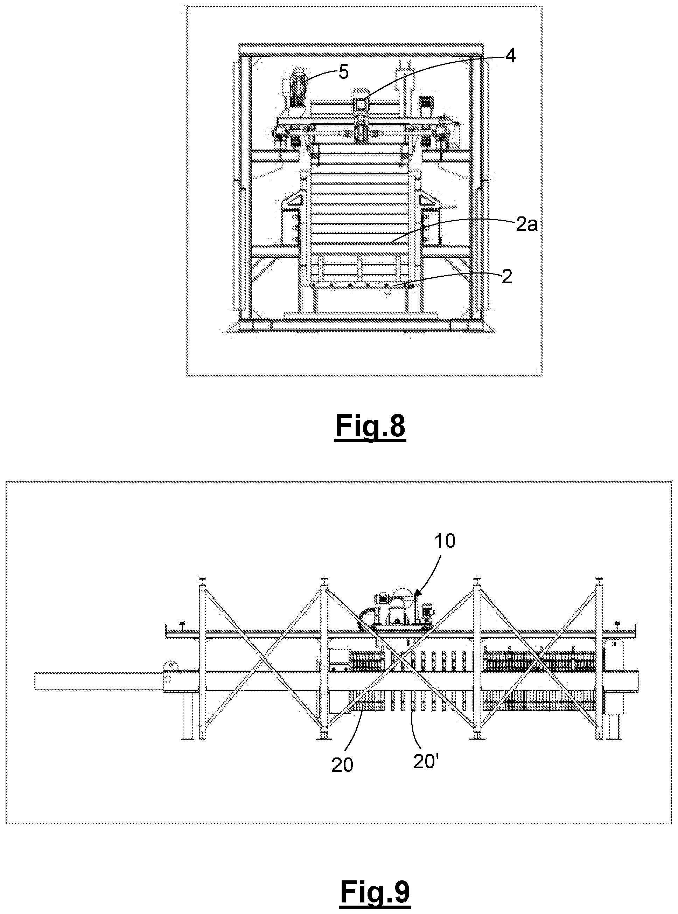

This washing step is repeated until the filtering plates of a first group are washed (Fig.5). The washing step can be done by filtering plates groups of filtering plates 20 that are carried in the open configuration (Fig.9).

For example, after the washing step of the first ten filtering plates, the washing group 10 stops and wait the opening of a second group of filtering plates. At this point, by the translation gear motor 4 the carriage support is moved in position above the second group of filtering plates 20' by said aligning sensors 35.

The washing cycle of the secondo filtering plates group is continue until all the groups of filtering plates 20 are washed.

Ended the washing step, the washing group 10 returns thereof in the rest position above the sludge shoulder.

Thus, start the washing step of a second group of filtering plates (Fig.9). In addition, on the support carriage 1 is provided, furthermore, a position sensor 27, in particular an encoder, (Fig.2 and 4) operated by the control unit 50.

Preferably on the support carriage 1 is arranged a guiding chain 60 in which it is arranged a feeding duct to supply the washing fluid 3' by the nozzles 3. The guiding chain 60 is adapted to guide the feeding duct to follow the movements that carries out the support carriage 1 and/or the washing group 2.

It is, furthermore, provided a second guiding chain 64 that houses the electric connection cables to supply the actuators of the washing device.

Furthermore, is provided a roller wheel duct 18 that allows to guide the feeding duct in the descent or ascent movements of the washing group 2.

## Claims

1. A washing device (10) of a filterpress (100) comprising:
- a support carriage (1), wherein said support carriage (1) is adapted for slidingly mounting on sliding guides (6, 7) of the filterpress above a plurality of filtering plates (20) aligned to each other along a longitudinal extension direction (X),
- a washing group (2) that comprises at least one nozzle (3) that is adapted to supply a washing fluid (3') flow,
- first actuating means (4) that is adapted to move said support carriage (1) according to said longitudinal extension direction (X),
- second actuating means (5) that is adapted to move said washing group (2) according to a top to down direction and vice-versa (V) such that said washing group (2) enters in a space (D) defined between two filtering plates (20) adjacent to each other in an open configuration,
**characterized in that** said washing group (2) comprises a roller shutter (2a) that is adapted to carry out the descent and ascent movements according to said top to down direction and vice- versa (V).

2. A washing device (10) according to claim 1, wherein said washing group (2) comprises a plurality of nozzles (3) that is faced in use towards the respective surfaces of the filtering plates (20).

3. A washing device (10) according to claim 1, wherein said first (4) and said second (5) moving means are operated by a control unit (50) programmed to:
- actuating said support carriage (1) along said longitudinal direction (X),
- positioning said washing group (2) at a space (D) defined between filtering plates (20) adjacent to each other,
- actuating said washing group (2) downhill according to said direction (V) along the filtering plates (20), and
- contemporaneously to said downhill movement or when the downhill of the washing group (2) is completed, supply a flow said washing fluid (3'),
- actuating said washing group (2) in ascent to move up toward an original position and stop said flow of washing fluid (3'),
- repeating said steps of actuating the support carriage (1), positioning the washing group (2) and actuating in a descent and ascent movements the washing group (2).

4. A washing device (10) according to any of the previous claims, wherein said support carriage (1) is adapted for slidingly mounting on said sliding guides (6, 7) of the filterpress that are arranged above the filtering plates (20), said support carriage (1) comprising wheels (4b, 4c) that slide along the sliding guides (6, 7).

5. A washing device (10) according to any of the previous claims, wherein said actuating means (4, 5) are for example electric actuators mounted on the support carriage (1), in particular is provided a translation gear motor (4) adapted to actuate the support carriage (1) along said sliding guides (6, 7) and a descent gear motor (5) adapted to actuate the washing group (2) in the topo to down movements and vice versa in the space (D) between filtering plates (20) adjacent.

6. A washing device (10) according to any of the previous claims, wherein aligning sensors (35, 36), in particular a laser sensor (35) or to photocell (36) or a combination thereof are provided.

7. A washing device (10) according to any of the previous claims, wherein a proximity sensors (36) mounted on the washing group (2) that allow to adjust the descent stroke of the washing group (2) are provided, such that said proximity sensors (36) act as a stroke end.

## Patentansprüche

1. Waschvorrichtung (10) einer Filterpresse (100) umfassend:
- einen Stützschlitten (1), wobei besagter Stützschlitten (1) geeignet ist, auf Gleitführungen (6, 7) der Filterpresse über einer Vielzahl von Filterplatten (20), die entlang einer Längsausdehnungsrichtung (X) zueinander ausgerichtet sind, gleitend angebracht zu werden,
- eine Waschgruppe (2), die mindestens eine Düse umfasst (3), die geeignet ist, einen Waschflüssigkeitsstrom (3') bereitzustellen,
- erste Betätigungsmittel (4), die geeignet sind, den besagten Stützschlitten (1) gemäß der besagten Längsausdehnungsrichtung (X) zu bewegen,
- zweite Betätigungsmittel (5), die geeignet sind, die besagte Waschgruppe (2) gemäß einer Richtung von oben nach unten und umgekehrt (V) zu bewegen, so dass die besagte Waschgruppe (2) in einen Raum (D) eintritt, der zwischen zwei nebeneinander liegenden Filterplatten (20) in einer offenen Konfiguration definiert ist, **dadurch gekennzeichnet, dass** besagte Waschgruppe (2) einen Rollladen (2a) umfasst, der geeignet ist, die Abwärts- und Aufwärtsbewegungen gemäß der besagten Richtung von oben nach unten und umgekehrt (V) auszuführen.

2. Waschvorrichtung (10) gemäß Anspruch 1, wobei besagte Waschgruppe (2) eine Vielzahl von Düsen (3) umfasst, die bei Gebrauch den jeweiligen Oberflächen der Filterplatten (20) zugewandt ist.

3. Waschvorrichtung (10) gemäß Anspruch 1, wobei besagte erste (4) und besagte zweite (5) Bewegungsmittel durch eine Steuereinheit (50) betrieben werden, die programmiert ist, um:
- den besagten Stützschlitten (1) entlang der besagten Längsrichtung (X) zu betätigen,
- die besagte Waschgruppe (2) in einem Raum (D) zu positionieren, der zwischen nebeneinander liegenden Filterplatten (20) definiert ist,
- die besagte Waschgruppe (2) abwärts gemäß der besagten Richtung (V) entlang der Filterplatten (20) zu bewegen, und
- gleichzeitig mit der besagten Abwärtsbewegung oder wenn das Abwärtsfahren der Waschgruppe (2) abgeschlossen ist, einen Strom der besagten Waschflüssigkeit (3') bereitzustellen,
- die besagte Waschgruppe (2) beim Aufwärtsfahren zu betätigen, um sich in eine Ausgangsposition aufwärts zu bewegen und den besagten Fluss der Waschflüssigkeit (3') zu stoppen,
- die besagten Schritte des Betätigens des Stützschlittens (1) zu wiederholen, indem die Waschgruppe (2) positioniert und in einer Abwärts- und Aufwärtsbewegung der Waschgruppe (2) betätigt wird.

4. Waschvorrichtung (10) gemäß einem jeden der vorhergehenden Ansprüche, wobei besagter Stützschlitten (1) geeignet ist, um auf den besagten Gleitführungen (6, 7) der Filterpresse, die oberhalb der Filterplatten (20) angeordnet sind, gleitend montiert zu werden, wobei besagter Stützschlitten (1) Räder (4b, 4c) umfasst, die entlang der Gleitführungen (6, 7) gleiten.

5. Waschvorrichtung (10) gemäß einem jeden der vorhergehenden Ansprüche, wobei besagte Betätigungsmittel (4, 5) zum Beispiel elektrische Aktuatoren sind, die auf dem Stützschlitten (1) montiert sind, insbesondere ist ein Translationsgetriebemotor (4) vorgesehen, der geeignet ist, den Stützschlitten (1) entlang der besagten Gleitführungen (6, 7) zu betätigen und ein Abwärtsgetriebemotor (5), der geeignet ist, die Waschgruppe (2) in den Bewegungen von oben nach unten und umgekehrt in dem Raum (D) zwischen den nebeneinander liegenden Filterplatten (20) zu betätigen.

6. Waschvorrichtung (10) gemäß einem jeden der vorhergehenden Ansprüche, wobei Ausrichtungssensoren (35, 36), insbesondere ein Lasersensor (35) oder eine Fotozelle (36) oder eine Kombination davon vorgesehen sind.

7. Waschvorrichtung (10) gemäß einem jeden der vorhergehenden Ansprüche, wobei auf der Waschgruppe (2) montierte Näherungssensoren (36) vorgesehen sind, die es ermöglichen, den Abwärtshub der Waschgruppe (2) einzustellen, so dass besagte Näherungssensoren (36) als Hubende wirken.

## Revendications

1. Dispositif de lavage (10) d'un filtre-presse (100) comprenant :
- un chariot de support (1), où ledit chariot de support (1) est monté de manière coulissante sur des guides coulissants (6, 7) au-dessus d'une multitude de plaques filtrantes (20) alignées les unes aux autres le long d'une direction d'extension longitudinale (X),
- un groupe de lavage (2) qui comprend au moins une buse (3) apte à fournir un flux de liquide de lavage (3'),
- des premiers moyens d'actionnement (4) adaptés pour déplacer ledit chariot de support (1) selon ladite direction d'extension longitudinale (X),
- des seconds moyens d'actionnement (5) qui sont adaptés pour déplacer ledit groupe de lavage (2) selon une direction de haut en bas et vice-versa (V) de sorte que ledit groupe de lavage (2) pénètre dans un espace (D) défini entre deux plaques filtrantes (20) adjacentes l'une à l'autre dans une configuration ouverte,
**caractérisé par le fait que** ledit groupe de lavage (2) comprend un volet roulant (2a) qui est apte à effectuer les mouvements de descente et de montée selon ladite direction de haut en bas et vice-versa (V).

2. Dispositif de lavage (10) selon la revendication 1, où ledit groupe de lavage (2) comprend une multitude de buses (3) qui sont orientées durant l'utilisation vers les surfaces respectives des plaques filtrantes (20).

3. Dispositif de lavage (10) selon la revendication 1, où lesdits premiers (4) et seconds (5) moyens de déplacement sont actionnés par une unité de commande (50) programmée pour :
- actionner ledit chariot de support (1) le long de ladite direction longitudinale (X),
- positionner ledit groupe de lavage (2) dans un espace (D) défini entre des plaques filtrantes (20) adjacentes l'une à l'autre,
- actionner ledit groupe de lavage (2) en descente selon ladite direction (V) le long des plaques filtrantes (20), et
- simultanément à ce mouvement de descente ou lorsque la descente du groupe de lavage (2) est terminée, fournir un flux de fluide de lavage (3'),
- actionner ledit groupe de lavage (2) en montée pour remonter vers une position initiale et arrêter ledit flux de liquide de lavage (3'),
- répéter les étapes d'actionnement du chariot de support (1), de positionnement du groupe de lavage (2) et d'actionnement des mouvements de descente et de montée du groupe de lavage (2).

4. Dispositif de lavage (10) selon l'une des revendications précédentes, où ledit chariot de support (1) est monté coulissant sur lesdits guides de glissement (6, 7) qui sont disposés au-dessus des plaques filtrantes (20), ledit chariot de support (1) comprenant des roues (4b, 4c) qui glissent le long des guides de glissement (6, 7).

5. Dispositif de lavage (10) selon l'une des revendications précédentes, où lesdits moyens d'actionnement (4, 5) sont par exemple des actionneurs électriques montés sur le chariot support (1), en particulier est prévu un motoréducteur de translation (4) adapté pour actionner le chariot support (1) le long desdits guides de glissement (6, 7) et un motoréducteur de descente (5) adapté pour actionner le groupe de lavage (2) dans les mouvements de haut en bas et inversement dans l'espace (D) entre les plaques filtrantes (20) adjacentes.

6. Dispositif de lavage (10) selon l'une des revendications précédentes, dans lequel des capteurs d'alignement (35, 36), notamment un capteur laser (35) ou une cellule photoélectrique (36) ou une combinaison de ceux-ci sont prévus.

7. Dispositif de lavage (10) selon l'une des revendications précédentes, où des capteurs de proximité (36) montés sur le groupe de lavage (2) permettant de régler la course de descente du groupe de lavage (2) sont prévus, de sorte que lesdits capteurs de proximité (36) agissent comme une fin de course.
